# DEMANDE DE BREVET EUROPEEN

(11) **EP 4 109 785 A1**
(43) Date de publication de la demande: **28.12.2022**
(21) Numéro de dépôt: 22180343.0
(22) Date de dépôt: 22.06.2022
(51) Int. Cl.: H04B 17/10, H04B 17/17, H04B 17/345, H04B 17/391, G05B 23/02

(54) **PROCEDE ET DISPOSITIF DE VERIFICATION DU FONCTIONNEMENT D'UN DISPOSITIF ELECTRONIQUE**

(30) Priorité: 23.06.2021 FR 2106659
(71) Demandeur: Orange, 92130 Issy-les-Moulineaux (FR)
(72) Inventeur: CUMIN, Julien, 92326 CHATILLON CEDEX (FR); L'HEREEC, Kévin, 92326 CHATILLON CEDEX (FR)

(57) **Abrégé**

Un procédé de vérification du fonctionnement d'un dispositif électronique (10) configuré pour émettre des signaux via un canal de communication radio, est mis en oeuvre par un dispositif de vérification (20) et comporte :
- la réception (E21) à partir du canal de communication radio, d'un signal (Sc) en provenance du dispositif électronique (10) ; et
- la détermination (E23, E24) du fonctionnement du dispositif électronique en fonction du bruit présent dans le signal reçu.

Utilisation pour vérifier le fonctionnement de tout dispositif électronique comportant des modules nécessaires pour l'émission de messages selon une technologie radio.

## Description

La présente invention concerne un procédé de vérification du fonctionnement d'un dispositif électronique.

Elle concerne en outre un dispositif de vérification du fonctionnement d'un dispositif électronique mettant en œuvre ce procédé de vérification

L'invention s'applique à tout dispositif électronique configuré pour émettre de messages selon une technologie radio, tel que WiFi, ZWave, LoRa, Bluetooth, DECT-ULE, etc.

Il est important de vérifier le bon fonctionnement des objets connectés à un réseau, ces objets pouvant présenter de dysfonctionnements, tel que des dysfonctionnements logiciels ou matériels, des problèmes d'alimentation électrique ou des attaques malveillants.

Un mécanisme connu pour vérifier le fonctionnement des objets dans un réseau est d'analyser le contenu des messages émis par l'objet. En effet, le contenu des messages émis par un objet peut être incohérent lorsque l'objet présente un dysfonctionnement.

Néanmoins, de nombreux dysfonctionnements n'impactent pas le contenu des messages émis, ces mécanismes n'étant donc pas utiles pour l'identification des objets présentant un des dysfonctionnements de ces types.

Par exemple, certains composants non critiques pour le fonctionnement d'un objet peuvent dysfonctionner sans impacter à court terme les messages émis par l'objet. Toutefois, le dysfonctionnement de ces composants peut entrainer à long terme le dysfonctionnement d'autres composants critiques pour le fonctionnement de l'objet ou le dysfonctionnent de l'objet lui-même.

Selon un autre exemple, des objets alimentés par des batteries ou par des piles électriques, peuvent continuer de fonctionner normalement (sans modifier le contenu des messages émis) bien que le niveau de charge du dispositif d'alimentation électrique soit bas.

Certains objets sont configurés pour informer de certains de ces dysfonctionnements par l'envoi de messages spécifiques. Par exemple, l'objet peut être configuré pour émettre un message indiquant le niveau de batterie de l'objet. Néanmoins, cette solution n'est pas optimale dès lors qu'elle implique une consommation énergétique supplémentaire et un encombrement des canaux de communication.

En outre, pour l'identification de certains dysfonctionnements, l'ajout de composants dédiés à cet effet est indispensable, ces composant dédiés pouvant eux-mêmes dysfonctionner.

Il existe ainsi un besoin d'un mécanisme amélioré pour vérifier le fonctionnement des objets connectés dans un réseau de communication.

La présente invention propose d'améliorer la situation en proposant un procédé de vérification du fonctionnement d'un objet permettant de détecter de manière fiable lorsque l'objet présente un dysfonctionnement.

A cet effet, l'invention vise, selon un premier aspect, un procédé de vérification du fonctionnement d'un dispositif électronique configuré pour émettre des signaux via un canal de communication radio.

Selon l'invention, le procédé de vérification est mis en œuvre par un dispositif de vérification et comporte : - la réception à partir du canal de communication radio, d'un signal en provenance du dispositif électronique ; et - la détermination du fonctionnement du dispositif électronique en fonction du bruit présent dans le signal reçu.

Ainsi, le dispositif de vérification donne une indication sur le fonctionnement du dispositif électronique en fonction du bruit contenu dans les signaux reçus en provenance du dispositif électronique.

Il est à noter que le bruit présent dans le signal émis par un dispositif électronique est caractéristique du dispositif électronique et donne une indication sur le fonctionnement du dispositif, en particulier s'il fonctionne correctement ou s'il présente un dysfonctionnement. En effet, lors du fonctionnement d'un dispositif électronique, les circuits électroniques du dispositif génèrent des émissions électromagnétiques dont les caractéristiques dépendent de la conception de ces circuits électroniques ainsi que du fonctionnement du dispositif, c'est-à-dire de l'opération mise en œuvre par le dispositif. Ainsi, les émissions électromagnétiques du dispositif électronique sont différentes en fonction de l'opération mise en œuvre par le dispositif ou du mode de fonctionnement du dispositif. Ces émissions électromagnétiques induisent du bruit dans les signaux émis par le dispositif électronique.

Le dispositif de vérification recevant un signal, vérifie ou analyse le bruit présent dans le signal émis par le dispositif électronique pour déterminer si le fonctionnement du dispositif électronique est correct ou erroné. La détermination du fonctionnement correct ou erroné du dispositif électronique est ainsi fonction du résultat de cette vérification ou analyse du bruit. Autrement dit, la vérification du bruit présent dans le signal permet de déterminer si le dispositif électronique fonctionne correctement ou s'il présente un dysfonctionnement.

On notera que le procédé de vérification s'applique à la vérification du fonctionnement d'au moins un dispositif électronique, c'est-à-dire à la vérification du fonctionnement d'un ou plusieurs dispositifs électroniques. Ainsi, les étapes du procédé de vérification sont mises en œuvre pour chaque dispositif électronique dont le fonctionnement est vérifié.

Selon une caractéristique, le procédé de vérification comporte en outre la génération d'une information relative au fonctionnement du dispositif électronique.

L'information générée donne une indication sur le fonctionnement correct ou erroné déterminé. Ainsi, l'information générée est fonction du bruit contenu dans le signal reçu par le dispositif de vérification, ce signal ayant été émis par le dispositif électronique.

Cette information peut comporter un message indicatif du bon fonctionnement de l'objet ou de la présence d'un dysfonctionnent dans le dispositif électronique.

Il est ainsi possible d'informer via le dispositif de vérification, par exemple à un utilisateur, du bon fonctionnement ou du dysfonctionnent du dispositif électronique, au moyen du message généré. Ainsi, en cas de dysfonctionnent du dispositif électronique, des actions pour identifier et/ou réparer le dysfonctionnement peuvent être effectuées.

Selon une caractéristique, la détermination du fonctionnement comporte la vérification du bruit présent dans le signal reçu.

Selon une caractéristique, la vérification du bruit est mise en œuvre par rapport à un bruit nominal associé à un mode de fonctionnement du dispositif électronique, le signal reçu par le dispositif de vérification correspondant à un signal ayant été émis par le dispositif électronique fonctionnant selon ledit mode de fonctionnement.

Le bruit nominal présent dans un signal émis par le dispositif électronique est déterminé préalablement, par exemple en usine après fabrication du dispositif électronique. En particulier, le bruit nominal associé à un mode de fonctionnement correspond au bruit généré par les circuits électroniques du dispositif électronique lorsque le dispositif électronique fonctionne correctement (c'est-à-dire sans présenter de dysfonctionnement) selon ce mode de fonctionnement.

On notera que le bruit dû aux émissions électromagnétiques est différent lorsque le dispositif fonctionne différemment. Ainsi, le bruit nominal peut être différent pour des différents modes de fonctionnement du dispositif électronique. Par conséquent, pour un dispositif fonctionnant selon plusieurs modes de fonctionnement, des bruits présentant des caractéristiques différentes peuvent être associés respectivement aux différents modes de fonctionnement.

Un dispositif fonctionne selon un mode de fonctionnement lorsqu'il est configuré pour mettre en œuvre une opération. Par exemple, si le dispositif électronique est un dispositif de stockage ou mémoire, les bruits générés par la mise en œuvre d'une opération de lecture et d'une opération d'écriture respectivement sont différents. On considère alors que le dispositif fonctionne selon un premier mode de fonctionnement lorsqu'il met en œuvre une opération de lecture et selon un deuxième mode de fonctionnement lorsqu'il met en œuvre une opération d'écriture.

En effet, le dispositif électronique fait intervenir des composants électroniques différents lorsqu'il fonctionne selon de modes de fonctionnement différents. Ainsi, le dispositif électronique émet des messages (ou signaux) de catégorie ou type différent lorsqu'il fonctionne respectivement selon de modes de fonctionnement différentes. On notera que le bruit présent dans un signal émis par le dispositif électronique correspond au bruit généré par les composants fonctionnant au moment de l'émission du message.

Par conséquent, le bruit nominal est déterminé préalablement pour chaque mode de fonctionnement du dispositif électronique. Ainsi, un ensemble de bruits nominaux est déterminé pour un dispositif électronique, chaque bruit nominal de l'ensemble correspondant au bruit nominal pour un mode de fonctionnement (ou type d'opération) du dispositif électronique. Par exemple, ces bruits nominaux peuvent être donnés par les fabricants de dispositifs électroniques, par exemple dans de spécifications techniques.

On notera que dans certains modes de réalisation, la détermination du bruit nominal correspond à la détermination du signal nominal, ce signal nominal contenant le bruit nominal.

Pour déterminer et quantifier le bruit présent dans un signal, plusieurs types de mesure peuvent être mises en œuvre. Ces mesures sont connues de l'homme du métier et ne nécessitent pas d'être décrites en détail ici. Par exemple, le bruit peut être quantifié en déterminant le rapport signal sur bruit du signal nominal, un spectrogramme du signal nominal, une liste d'harmoniques présents dans le signal nominal, etc. Selon un autre exemple, le bruit nominal est quantifié en déterminant le signal nominal, ce signal contenant le bruit.

Lorsque selon le résultat de la vérification du bruit, le bruit présent dans le signal reçu est similaire au bruit nominal associé au mode de fonctionnement courant du dispositif électronique, le dispositif électronique fonctionne correctement.

Au contraire, si selon de résultat de la vérification du bruit, le bruit présent dans le signal reçu est différent du bruit nominal associé au mode de fonctionnement courant du dispositif électronique, le dispositif électronique présente un dysfonctionnement.

Selon une caractéristique, la vérification du fonctionnement du dispositif électronique comporte la comparaison du bruit présent dans le signal reçu et du bruit nominal associé au mode de fonctionnement du dispositif électronique, la détermination du fonctionnement étant fonction du résultat de la comparaison.

Lors de la comparaison du bruit présent dans le signal reçu, dit bruit courant, avec le bruit nominal, au moins une caractéristique des bruits, courant et nominale, est comparée. Par exemple, des valeurs de fréquences introduites ou d'amplitude peuvent être comparées.

Selon une caractéristique, la comparaison du bruit comporte la vérification de la similarité entre le signal reçu, et un signal nominal comportant le bruit nominal associé au mode de fonctionnement du dispositif électronique.

Ainsi, la vérification du bruit comporte mesurer la similarité entre le signal reçu comportant le bruit courant et un signal nominal comportant le bruit nominal associé au mode de fonctionnement du dispositif électronique.

Selon un mode de réalisation, le bruit présent dans le signal reçu est extrait et ensuite comparé avec le bruit nominal.

Selon une caractéristique, vérifier la similarité entre le signal reçu et le signal nominal comporte la mise en œuvre d'un algorithme de similarité desdits signaux.

La mise en œuvre d'un algorithme de similarité permet de vérifier si l'influence du bruit courant sur le signal reçu est similaire à l'influence du bruit nominal sur le signal nominal. Dans d'autres termes, le bruit présent dans un signal modifie les caractéristiques de ce signal. Ainsi, en appliquant un algorithme de similarité aux signaux reçu (ou signal courant) et nominal, il est vérifié si l'influence des bruits courant et nominal sur les signaux courant et nominal respectivement est similaire ou différente. Si le bruit courant modifie le signal courant de manière similaire à comment le bruit nominal modifie le signal nominal, le dispositif électronique fonctionne correctement. En cas contraire, le dispositif électronique présente un dysfonctionnement.

Selon une caractéristique, l'algorithme mis en œuvre est sélectionné en fonction d'au moins une caractéristique du bruit nominal associé à un mode de fonctionnement du dispositif électronique.

En fonction du mode de fonctionnement du dispositif électronique, le bruit dans les signaux émis est de différente nature, ou autrement dit le message émis par le dispositif électronique est de catégorie ou type différent. Par exemple, si la puissance d'émission du signal est modifiée du fait du bruit induit par les émissions électromagnétiques des circuits électroniques, un algorithme adapté à vérifier les variations de puissance est un algorithme de corrélation croisée, précédé d'un algorithme de réalignement temporel tel que la déformation temporelle dynamique (DTW pour « *Dynamic Time Warping* »). Ainsi, dans cet exemple, ces algorithmes sont sélectionnés pour vérifier la similarité entre le signal courant et le signal nominal. En effet, en appliquant des tels algorithmes aux signaux courant et nominal, il peut être vérifié si la variation de puissance générée par le bruit courant est similaire à la variation de puissance générée par le bruit nominale dans le signal nominal. Selon un autre exemple, dans un fonctionnement nominal du dispositif, le bruit peut induire un déphasage du signal émis par le dispositif. Dans ce cas, un algorithme adéquat peut être un algorithme de type « "adaptation à une sinusoïde" », connu en terminologie anglo-saxonne comme algorithme « sine-wave-fit ». Dans ce cas, cet algorithme est sélectionné pour l'appliquer aux signaux courant et nominal.

Selon une autre caractéristique, la vérification du bruit présent dans le signal reçu comporte la vérification d'une caractéristique d'un bruit représentatif d'un dysfonctionnement du dispositif électronique.

Ainsi, la présence d'un dysfonctionnement peut être surveillée par la vérification d'un bruit induit par le dysfonctionnement, ce bruit ayant une caractéristique particulière connue. En effet, la caractéristique du bruit typique d'un dysfonctionnement particulier du dispositif électronique peut être recherchée pour déterminer si le dispositif électronique présente ce dysfonctionnent particulier.

Par exemple, un type de dysfonctionnement peut introduire une fréquence d'une valeur prédéterminée. Ainsi, la vérification du bruit comporte la vérification de la valeur des fréquences du signal reçu (par exemple après une analyse spectrale du signal reçu) afin de vérifier si le bruit contient une fréquence de valeur prédéterminée.

Selon une caractéristique, la détermination du fonctionnement du dispositif électronique comporte l'analyse du spectre du signal reçu.

Par exemple, le spectre du signal reçu peut être utilisé pour déterminer si le signal reçu contient une fréquence présentant une valeur prédéterminée, la présence dans le signal reçu de cette fréquence présentant ladite valeur prédéterminée étant représentative d'un dysfonctionnement du dispositif électronique.

Dans d'autres termes, la vérification du bruit présent dans le signal reçu comporte la mise en œuvre d'une analyse spectrale du signal reçu permettant de détecter si une fréquence d'une valeur prédéterminée représentative d'un dysfonctionnement du dispositif électronique est présente dans le signal reçu.

Les caractéristiques du procédé de vérification présenté ci-dessus peuvent être prises isolément ou en combinaison les unes avec les autres.

La présente invention concerne, selon un deuxième aspect, un dispositif de vérification configuré pour vérifier le fonctionnement d'un dispositif électronique émettant des signaux via un canal de communication radio, le dispositif de vérification comportant :
- un module de réception configuré pour recevoir à partir du canal de communication radio, un signal en provenance du dispositif électronique ; et
- un module de détermination configuré pour déterminer le fonctionnement du dispositif électronique en fonction du bruit présent dans le signal reçu.

La présente invention concerne, selon un troisième aspect, un équipement configuré pour communiquer avec au moins un dispositif électronique via un canal de communication radio. L'équipement comporte un dispositif de vérification conforme à l'invention destiné à vérifier le fonctionnement dudit au moins un dispositif électronique.

Ainsi, l'équipement est configuré pour mettre en œuvre le procédé de vérification du fonctionnement dudit au moins un dispositif électronique. L'équipement peut être un point d'accès à un réseau permettant l'accès du dispositif électronique audit réseau, par exemple une passerelle.

Dans un autre mode de réalisation, l'équipement peut être un dispositif électronique, ce dispositif électronique étant configuré pour communiquer avec au moins un deuxième dispositif électronique et comportant le dispositif de vérification conforme à l'invention. Le dispositif électronique est ainsi destiné à vérifier le fonctionnement dudit au moins un deuxième équipement électronique.

La présente invention concerne, selon un quatrième aspect, un dispositif électronique comportant un module d'émission configuré pour émettre, via un canal de communication radio, un signal à destination d'un dispositif de vérification conforme à l'invention.

Selon une caractéristique, le dispositif électronique comporte en outre un module de réception configuré pour recevoir, en provenance du dispositif de vérification, une commande d'initiation destinée à initier la vérification du fonctionnement du dispositif électronique, ledit signal étant émis en réponse à la réception de la commande d'initiation.

La présente invention concerne, selon un cinquième aspect, un système de vérification du fonctionnement d'au moins un dispositif électronique. Le système comporte un ensemble de dispositifs électroniques et un dispositif de vérification conforme à d'invention, ce dispositif de vérification étant destiné à vérifier le fonctionnement dudit au moins un dispositif électronique.

La présente invention concerne, selon un sixième aspect, un programme pour un dispositif de vérification, comprenant des instructions de code de programme destinées à commander l'exécution des étapes du procédé de vérification selon l'invention.

La présente invention concerne, selon un septième aspect, un support d'informations lisible par un processeur dans un dispositif de vérification du fonctionnement d'au moins un dispositif électronique, sur lequel est enregistré le programme d'ordinateur selon l'invention.

Le dispositif de vérification, l'équipement, le dispositif électronique, le système de vérification, le programme d'ordinateur et le support présentent des caractéristiques et avantages analogues à ceux décrits précédemment en relation avec le procédé de vérification.

D'autres particularités et avantages de l'invention apparaîtront encore dans la description ci-après.

Aux dessins annexés, donnés à titre d'exemples non limitatifs :
- la figure 1 représente le contexte dans lequel l'invention s'applique selon un mode de réalisation de l'invention ;
- la figure 2 illustre des étapes d'un procédé de vérification du fonctionnement d'un dispositif électronique conforme à un mode de réalisation de l'invention ;
- la figure 3a illustre une architecture matérielle pouvant mettre en œuvre le procédé de vérification proposé ; et
- la figure 3b est une représentation fonctionnelle d'un dispositif de vérification conforme à un mode de réalisation.

La technique proposée s'applique à tout dispositif électronique ou objet comportant des modules nécessaires pour l'émission de messages selon une technologie radio. Elle s'applique en particulier dans le domaine de l'« Internet des objets » (« Internet of Things » ou IoT dans la littérature anglo-saxonne), pour vérifier le bon fonctionnement des objets, ces objets étant très souvent nombreux et de nature différente. Un objet connecté est tout dispositif électronique ou objet configuré pour émettre ou recevoir des données via un réseau de communication.

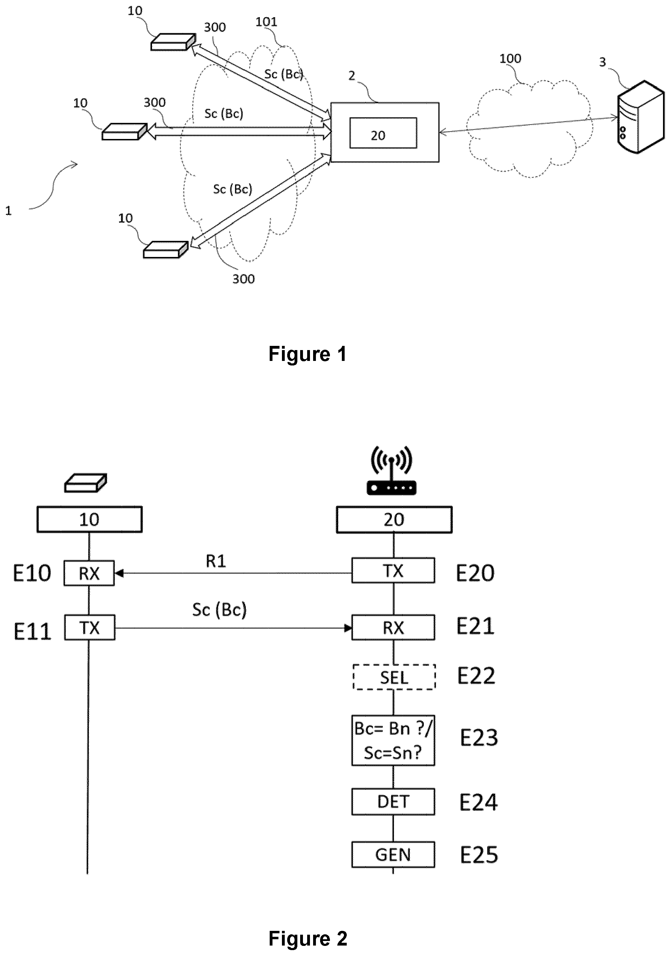

La **figure 1** représente un système pouvant mettre en œuvre un mode de réalisation de l'invention. En particulier, la figure 1 illustre un ensemble de dispositifs électroniques ou objets connectés 1. Les objets connectés 10 peuvent avoir des usages divers et peuvent être utilisés dans des contextes variés, tel que la sphère privée des utilisateurs, des industries, des bâtiments ou villes intelligentes ou autre. Des exemples d'objets connectés sont un terminal de téléphonie mobile, un ordinateur portable, une tablette, une passerelle, une imprimante, une enceinte audio, un décodeur de télévision, un téléviseur, une console de jeux, un appareil électroménager, un capteur, une caméra, etc.

Les objets connectés 10 sont en outre configurés pour communiquer avec un dispositif de vérification 20 via un canal de communication radio, conformément à au moins une technologie radio, tel que WiFi, ZWave, LoRa, Bluetooth, DECT-ULE, etc.

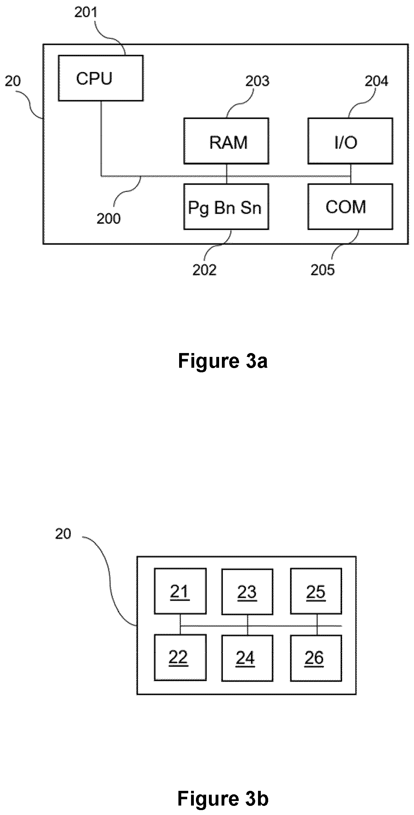

Le dispositif de vérification 20 sera décrit plus en détail en référence aux figures 3a et 3b. Il est configuré pour mettre en œuvre le procédé de vérification du fonctionnement d'un dispositif électronique ou objet 10 proposé. Le procédé de vérification sera décrit en détail en référence à la figure 2.

En outre, les objets 10 sont configurés pour communiquer avec un dispositif de point d'accès ou passerelle 2 permettant l'accès à un réseau de communications étendu 100 ou réseau de type WAN (pour « Wide Area Network »), tel qu'Internet. L'ensemble d'objets 1 forme avec la passerelle 2 un réseau local 101 ou réseau de type LAN (pour « Local Area Network »), tel qu'un réseau résidentiel ou un réseau d'entreprise.

Les objets connectés 10 et la passerelle 2 sont configurés pour échanger de donnés entre eux, au moins selon des communications sans fils, par exemple conformément à un protocole Wi-Fi (marque déposée).

On notera que dans la description, les termes objet, objet connecté et dispositif électronique sont équivalents et représentent un même équipement 10.

Dans le mode de réalisation illustré, le dispositif de vérification 20 est intégré dans la passerelle 2. Ce mode de réalisation permet la centralisation, dans un même équipement, de la vérification de l'ensemble d'objets connectés 1.

Dans d'autres modes de réalisation, le dispositif de vérification est indépendant de la passerelle. En outre, plusieurs dispositifs de vérification peuvent être présents dans le réseau formé par les objets et la passerelle, chaque dispositif de vérification se chargeant de la vérification d'un sous-ensemble d'objets.

Par exemple, le dispositif de vérification peut être intégré dans l'un des objets de l'ensemble d'objets, cet objet étant ainsi configuré pour vérifier le fonctionnement d'au moins une partie des objets 10 de l'ensemble d'objets 1. Selon un mode de réalisation, plusieurs objets peuvent comporter un dispositif de vérification, chaque objet étant configuré pour la vérification du fonctionnement d'un sous-ensemble d'objets. Ce mode de réalisation permet une mise en œuvre décentralisée de la vérification du fonctionnement des objets de l'ensemble. Ce mode de réalisation peut être utile lorsque le nombre d'objets est élevé et que la distance entre les objets est importante. Elle peut être aussi utile pour certains types de communication radio.

Dans d'autres modes de réalisation, le dispositif de vérification peut être indépendant du réseau formé par l'ensemble d'objets et la passerelle, ou se trouver dans un autre équipement du réseau.

Par exemple, le dispositif de vérification peut se trouver dans un serveur 3 du réseau étendu 100 auquel les objets accèdent via la passerelle 2.

Selon un autre exemple, le dispositif de vérification peut être un dispositif électronique, de type console portable, configuré pour établir une connexion radio ponctuelle avec l'objet et vérifier son fonctionnement. A titre d'exemple nullement limitatif, cette console portable peut être utilisée par un opérateur ou par un bras robotisé pour effectuer la vérification du fonctionnement de l'objet, par exemple lors de contrôles d'un réseau d'objet connectés, qu'ils soient des contrôles périodiques ou ponctuelles, par exemple en cas d'un dysfonctionnement détecté dans le réseau.

Quelle que soit la situation du dispositif de vérification, il est configuré pour mettre en œuvre le procédé de vérification du fonctionnement d'au moins un objet.

La **figure 2** Illustre des étapes du procédé de vérification conforme à un mode de réalisation.

Grace à la mise en œuvre du procédé de vérification du fonctionnement d'un objet, le dispositif de vérification 20 détermine si le fonctionnement de l'objet 10 est correct ou erroné, pouvant ainsi détecter lorsque l'objet présente un dysfonctionnent. Comme il sera décrit en détail ci-dessous, le fonctionnement de l'objet est vérifié par l'analyse ou vérification du bruit contenu dans un signal reçu par le dispositif de vérification en provenance de l'objet.

Le procédé de vérification comporte ainsi la réception E21, à partir d'un canal de communication radio 300 (illustré à la figure 1) établi entre l'objet 10 et le dispositif de vérification 101, d'un signal Sc en provenance de l'objet 10. Le signal Sc représente un flux de données ou message.

Le signal Sc reçu est ainsi émis E11 par l'objet 10. Selon un mode de réalisation, le signal émis par l'objet 10 un signal dédié à la vérification du fonctionnement de l'objet. Selon un autre mode de réalisation, le signal émis est un signal contenant un flux de données destiné par exemple à un autre objet de l'ensemble ou à un équipement dans un autre réseau tel qu'un serveur 3 du réseau étendu 100. Dans ce dernier mode de réalisation, le dispositif de vérification tire profit de tout type de message reçu en provenance de l'objet pour vérifier son fonctionnement.

Dans un mode de réalisation, lorsque le signal reçu est un signal dédié à la vérification du fonctionnement de l'objet, le dispositif de vérification émet E20 une requête ou commande d'initiation R1 destinée à un ou plusieurs objets 10 de l'ensemble 1 pour initier la vérification de leur fonctionnement.

L'objet 10 recevant E10 une telle requête ou commande d'initiation R1 génère un signal Sc et l'adresse E11 au dispositif de vérification 20.

Par exemple, le dispositif de vérification peut être configuré pour émettre un message ou commande d'initiation périodiquement, ou lorsqu'il détecte un événement particulier.

Une fois que le dispositif de vérification 20 a reçu E21 un signal Sc en provenance de l'objet 10, il détermine le fonctionnement de l'objet, c'est-à-dire qu'il détermine si l'objet fonctionne correctement ou présente un dysfonctionnement.

Comme décrit ci-dessus, le signal reçu Sc peut être un signal dédié à la vérification de l'objet 10 ou peut être tout autre type de signal reçu en provenance de l'objet 10.

Pour déterminer le fonctionnement correct ou erroné de l'objet, le dispositif de vérification 20 analyse le bruit Bc présent dans le signal reçu Sc, dit aussi signal courant Sc. Le bruit présent dans le signal reçu Sc est nommé bruit courant Bc.

Pour analyser le bruit courant ou bruit présent dans le signal reçu, le dispositif de vérification 20 met en œuvre la vérification E23 du bruit présent dans le signal reçu Sc.

Selon un mode de réalisation, la vérification du bruit est mise en œuvre par rapport à un bruit nominal associé à un mode de fonctionnement de l'objet.

Le bruit présent dans les signaux émis par l'objet peut être différent en fonction du mode de fonctionnement de l'objet, c'est-à-dire en fonction de l'opération mise en œuvre par l'objet. Le bruit associé aux modes de fonctionnement de l'objet est mesuré préalablement à la mise en œuvre du procédé, par exemple en usine après fabrication de l'objet.

Pour la mise en œuvre de la vérification du bruit, le dispositif de vérification a accès aux bruits nominaux prédéterminés respectivement pour les modes de fonctionnement de l'objet. Cet ensemble de bruits nominaux peut être stocké dans des dispositifs mémoire intégrés dans l'objet ou dans un autre équipement. Cet équipement peut être par exemple un serveur 3 auquel le dispositif de vérification a accès, ou l'objet connecté vérifié.

Dans un mode de réalisation, pour déterminer le fonctionnement de l'objet, le dispositif de vérification E23 du bruit met en œuvre une comparaison du bruit courant (bruit présent dans ledit signal reçu Sc) et du bruit nominal associé au mode de fonctionnement de l'objet. Le mode de fonctionnement de l'objet correspond au mode de fonctionnement de l'objet lors de l'émission du message destiné au dispositif de vérification 20.

En fonction du résultat de cette comparaison, le dispositif de vérification détermine E24 si l'objet fonctionne correctement ou s'il présente un dysfonctionnement.

Dans un mode de réalisation, la comparaison des bruits courant et nominal est mise en œuvre par la vérification de la similarité entre ledit signal reçu Sc, et un signal nominal Sn comportant le bruit nominal Bn associé au mode de fonctionnement de l'objet.

Un signal nominal est un signal émis par l'objet fonctionnant correctement selon un mode de fonctionnement, le bruit nominal étant ajouté au signal nominal. Ainsi, pour chaque objet 10, un signal nominal Sn et un bruit nominal Bn sont associés à chaque mode de fonctionnement de l'objet 10.

Dans un mode de réalisation, la vérification de la similarité es mise en œuvre en appliquant aux signaux courant et nominal un algorithme de similarité de signaux. Un algorithme de similarité de signaux compare des caractéristiques des signaux comparés.

Si selon la vérification de la similarité des signaux courant et nominal, ou de manière équivalente des bruits courant et nominal, le bruit courant est différent du bruit nominal, le dispositif de vérification 20 détermine E24 que l'objet présente un dysfonctionnent.

Au contraire, si le bruit courant est similaire au bruit nominal, le dispositif de vérification 20 détermine E24 que l'objet fonctionne correctement.

Dans un autre mode de réalisation, la vérification de la similarité de la similarité est mise en œuvre en appliquant un algorithme de similarité aux bruits courant et nominal extraits préalablement des signaux courant et nominal respectivement.

Différents algorithmes peuvent être utilisés pour mesurer la similarité des signaux. L'algorithme mis en œuvre peut être sélectionné en fonction d'au moins une caractéristique du bruit nominal associé au mode de fonctionnement de l'objet.

Selon un mode de réalisation, le dispositif de vérification est configuré pour sélectionner E22 en fonction d'une caractéristique du bruit nominal associé au mode de fonctionnement de l'objet. Dans ce mode de réalisation, plusieurs algorithmes peuvent être utilisés pour un même objet. Par exemple, des algorithmes différents peuvent être utilisés selon le mode de fonctionnement de l'objet. Par exemple, une liste associe un mode de fonctionnement de l'objet avec un algorithme à utiliser pour vérifier le fonctionnement de l'objet fonctionnant selon ce mode de fonctionnement. En consultant cette liste, le dispositif de vérification, peut connaitre l'algorithme adéquat à utiliser pour la vérification du fonctionnement de l'objet pour chaque mode de fonctionnement de l'objet. En effet, le bruit généré par l'objet pouvant présenter de caractéristiques différentes en fonction du mode de fonctionnement de l'objet, certains algorithmes peuvent être plus adaptés que des autres pour la vérification du bruit dans le signal reçu par le dispositif de vérification. Cette liste peut être stockée dans des dispositifs de stockage (mémoire) internes ou externes au dispositif de vérification.

Selon un autre mode de réalisation, le dispositif de vérification peut être configuré pour sélectionner l'algorithme de similarité en fonction de l'objet dont lequel il vérifie son fonctionnement. Par exemple, une liste peut associer à chaque l'objet 10 de l'ensemble d'objets 1, un algorithme à utiliser pour vérifier son fonctionnement. Le dispositif de vérification peut ainsi consulter cette liste (qui peut être stockée dans un dispositif de stockage interne ou externe au dispositif de vérification) pour sélectionner l'algorithme le plus adapté pour la vérification du fonctionnement d'un objet.

Selon un mode de réalisation, la détermination du fonctionnement de l'objet comporte l'analyse du spectre du signal reçu suivi d'une mesure de la similarité des spectres des signaux courant et nominal.

Que l'algorithme soit sélectionné par le dispositif de vérification lui-même ou par le concepteur du dispositif de vérification, l'algorithme est sélectionné en fonction des caractéristiques du bruit spécifique à l'objet et par conséquent du bruit que le dispositif de vérification cherche à identifier pour déterminer si l'objet fonctionne correctement ou s'il présente un dysfonctionnement.

Par exemple, si le bruit présent dans le signal introduit des harmoniques de haute fréquence, l'algorithme utilisé est adapté à détecter la présence de ces harmoniques pour déterminer si le fonctionnement est correct ou erroné.

Par exemple, l'algorithme peut être appliqué aux analyses spectrales du bruit nominal et du bruit courant pour mesurer l'écart entre ces spectres. En pratique, selon cet algorithme une transformé de Fourier est appliquée aux bruits courant et nominal pour obtenir les spectres associés respectivement aux bruits courant et nominal. Ensuite, un filtre est appliqué aux spectres obtenus, tel qu'un filtre passe-bas, pour extraire les hautes fréquences des spectres correspondant aux signaux courant et nominal. Si les fréquences des deux spectres sont similaires, le bruit présent dans le signal courant est similaire au bruit présent dans le signal nominal, le dispositif de vérification déterminant E24 que l'objet fonctionne correctement.

Si au contraire, les fréquences du bruit nominal ne sont pas retrouvées dans le bruit courant, le dispositif de vérification détermine E24 que l'objet présente un dysfonctionnent.

Dans un autre exemple, si le bruit présent dans le signal nominal modifie la puissance émise du signal émis, l'algorithme peut être adapté à déterminer des puissances d'émission des signaux nominal et courant, suivi d'une comparaison de ces puissances d'émission.

Dans un autre exemple, si le bruit nominal génère un décalage temporel du signal nominal, un algorithme adapté à mesurer des séries temporelles tel qu'un algorithme de type « *déformation temporelle dynamique »* (connu en terminologie anglo-saxonne comme algorithme DTW, pour « Dynamic Time Warping ») peut être utilisé.

L'application de ces algorithmes est connue de l'homme du métier et ne nécessite d'être décrite plus en détail.

Selon un mode de réalisation, la vérification du bruit présent dans le signal reçu Sc comporte la vérification d'une caractéristique d'un bruit représentatif d'un dysfonctionnement dudit dispositif électronique.

Par exemple, si selon à l'analyse préalable de l'objet, il est déterminé qu'un dysfonctionnement de l'objet induit un pic de haute fréquence, la vérification du bruit présent dans le signal reçu ou signal courant Sc comporte vérifier si ce pic de haute fréquence est présent dans le signal courant Sc. En effet certains dysfonctionnements courants (par exemple un composant mémoire fonctionnant mal) provoquent un pic de haute fréquence caractéristique, pouvant être identifié en usine au préalable.

Si le pic de haute fréquence est présent, le dispositif de vérification 20 détermine que l'objet connecté présente un dysfonctionnement. Au contraire, si le pic de haute fréquence n'est pas présent, le dispositif de vérification 20 détermine que l'objet connecté fonctionne correctement.

La vérification de la présence du pic de haute fréquence peut être mise en œuvre par l'analyse spectrale du signal courant Sc.

Le procédé de vérification peut comporter en outre la génération E25 d'une information relative au fonctionnement du dispositif électronique déterminé.

Cette information peut comporter un message indicatif du bon fonctionnement de l'objet ou de la présence d'un dysfonctionnent dans l'objet.

Dans un mode de réalisation, l'information relative au fonctionnement de l'objet générée peut être adressée à un équipement surveillant l'objet connecté, par exemple un terminal de communication d'un utilisateur ou d'un opérateur, ou un serveur tel qu'un serveur applicatif.

La récolte, par un même équipement, des informations relatives au fonctionnement de l'ensemble d'objets peut être très utile pour la surveillance du bon fonctionnement des objets.

La **figure 3a** illustre schématiquement une architecture matérielle d'un dispositif de vérification pouvant mettre en œuvre le procédé de vérification du fonctionnement d'un dispositif électronique proposé.

Le dispositif de vérification 20 comprend un bus de communication 200 auquel sont reliées :
- une unité de traitement 201, nommée sur la figure CPU (pour « Central Processing Unit ») et pouvant comporter un ou plusieurs processeurs ;
- une mémoire non volatile 202, par exemple ROM (pour « Read Only Memory »), EEPROM (pour « Electrically Erasable Read Only Memory ») ou une mémoire Flash;
- une mémoire vive 203 ou RAM (pour « Random Access Memory ») ;
- une interface 204 d'entrée/sortie, nommée sur la figure I/O (pour « Input/Output »), par exemple des touches ou boutons, un écran, un clavier, une souris ou un autre dispositif de pointage tel qu'un écran tactile ou une télécommande permettant à un utilisateur d'interagir avec l'équipement 2 via une interface graphique ou interface homme-machine ; et
- une interface de communication 205, nommée COM sur la figure, adaptée à échanger des données par exemple avec les dispositifs électroniques 10, ou avec un serveur 3 via un réseau de communication 100.

La mémoire vive 203 comprend des registres adaptés à l'enregistrement des variables et paramètres créés et modifiés au cours de l'exécution d'un programme informatique comprenant des instructions pour la mise en œuvre du procédé de vérification proposé. Les codes d'instructions du programme stocké en mémoire non-volatile 202 sont chargés en mémoire RAM 203 en vue d'être exécutés par l'unité de traitement CPU 201.

La mémoire non-volatile 202 est par exemple une mémoire réinscriptible de type EEPROM ou mémoire Flash pouvant constituer un support au sens de l'invention, c'est-à-dire pouvant comprendre un programme informatique comprenant des instructions pour la mise en œuvre du procédé de vérification proposé. La mémoire réinscriptible peut comprendre par exemple signaux nominaux et/ou bruits nominaux prédéterminés pour les modes de fonctionnement de chaque objet connecté 10 de l'ensemble d'objets 1. Ces données sont mises à jour à fur et à mesure que des objets connectés sont ajoutés ou supprimés.

Ce programme définit, par le biais de ses instructions, des modules fonctionnels du dispositif de vérification qui sont mise en œuvre et/ou commandent les éléments matériels décrits précédemment. La **figure 3b** est une représentation fonctionnelle d'un équipement conforme à un mode de réalisation. Ces modules comprennent notamment :
- un module de réception 21 configuré pour recevoir à partir dudit canal de communication radio, un signal (représentatif d'un flux de données) en provenance dudit dispositif électronique ; et
- un module de détermination 22 configuré pour déterminer le fonctionnement dudit dispositif électronique en fonction du bruit présent dans le signal reçu.

Le signal reçu par le module de réception 21 est émis par un module d'émission du dispositif électronique configuré pour émettre, via un canal de communication radio, un signal à destination d'un dispositif de vérification 20.

Selon des modes de réalisation, le dispositif de vérification peut comporter :
- un module de génération 23 configuré pour générer une information relative au fonctionnement du dispositif électronique ; et/ou
- un module de vérification 24 pour vérifier le bruit présent dans le signal reçu ;

Selon un mode de fonctionnement, le module de vérification de bruit est configuré pour vérifier le bruit dans le signal reçu par rapport à un bruit nominal associé à un mode de fonctionnement du dispositif électronique, le signal reçu par le dispositif de vérification correspondant à un signal ayant été émis par le dispositif électronique fonctionnant selon ledit mode de fonctionnement.

Selon un mode de fonctionnement, le module de vérification de bruit peut être configuré pour vérifier une caractéristique d'un bruit représentatif d'un dysfonctionnement dudit dispositif électronique.

Le dispositif de vérification peut comporter en outre un module de comparaison 25 configuré pour comparer le bruit présent dans ledit signal reçu et du bruit nominal associé au mode de fonctionnement du dispositif électronique.

Le module de détermination est adapté à déterminer en fonction du résultat de ladite comparaison, si le dispositif électronique fonctionne correctement ou s'il présente un disfonctionnement.

Dans un mode de fonctionnement, le dispositif de détermination du fonctionnement du dispositif électronique peut comporter un module d'analyse configuré pour analyser le spectre du signal reçu.

Dans un mode de fonctionnement, le module de comparaison comporte un module de vérification configuré pour vérifier la similarité entre ledit signal reçu, et un signal nominal comportant le bruit nominal associé au mode de fonctionnement du dispositif.

Dans un mode de fonctionnement, le dispositif de vérification comporte un module de sélection 26 configuré pour sélectionner l'algorithme de similarité en fonction d'au moins une caractéristique du bruit nominal associé au mode de fonctionnement du dispositif électronique.

Les modules et moyens précités sont pilotés par le processeur de l'unité de traitement 201. Ils peuvent prendre la forme d'un programme exécutable par un processeur, ou une forme matérielle (ou « hardware »), telle un circuit intégré spécialisé (connu en terminologie anglo-saxonne connu comme ASIC pour « Application-Specific Integrated Circuit »), un système sur puce (connu en terminologie anglo-saxonne comme SoC pour « System On Chip »), ou un composant électronique de type circuit logique programmable, tel qu'un composant de type FPGA (pour « Field-Programmable Gate Array »).

Le dispositif électronique ou objet 10 comprend également un bus de communication auquel sont reliées une unité de traitement ou microprocesseur, une mémoire non volatile, une mémoire vive ou RAM, et une interface de communication adaptée notamment à échanger des données avec le dispositif de vérification 20. L'objet connecté 10 peut par exemple envoyer au dispositif de vérification 20 des signaux dédié ou pas dédiés, que le dispositif de vérification va utiliser pour déterminer si le fonctionnement de l'objet est correct ou erroné en mettant en œuvre le procédé de vérification proposé.

En outre, l'objet connecté 10 peut recevoir un message d'initiation en provenance du dispositif de vérification destiné à enclencher la mise en œuvre du procédé de vérification proposé.

## Revendications

1. Procédé de vérification du fonctionnement d'un dispositif électronique (10) configuré pour émettre des signaux via un canal de communication radio (300), ledit procédé de vérification étant mis en œuvre par un dispositif de vérification (20) et comportant :
- la réception (E21) à partir dudit canal de communication radio, d'un signal (Sc) en provenance du dispositif électronique (10) ; et
- la détermination (E23, E24) du fonctionnement du dispositif électronique (10) en fonction du bruit présent (Bc) dans le signal reçu (Sc).

2. Procédé de vérification conforme à la revendication 1, dans lequel le procédé de vérification comporte en outre la génération (E25) d'une information relative au fonctionnement du dispositif électronique.

3. Procédé de vérification conforme à l'une des revendications 1 ou 2, dans lequel, la détermination du fonctionnement comporte la vérification (E23) du bruit présent dans le signal reçu.

4. Procédé de vérification conforme à la revendication 3, dans lequel la vérification (E23) du bruit est mise en œuvre par rapport à un bruit nominal (Bn) associé à un mode de fonctionnement du dispositif électronique (10), le signal reçu (Sc) par le dispositif de vérification (20) correspondant à un signal ayant été émis par le dispositif électronique (10) fonctionnant selon ledit mode de fonctionnement.

5. Procédé de vérification conforme à la revendication 4, dans lequel la vérification (E23) du fonctionnement du dispositif électronique (10) comporte la comparaison dudit bruit (Bc) présent dans ledit signal reçu (Sc) et du bruit nominal (Bn) associé au mode de fonctionnement du dispositif électronique, la détermination du fonctionnement étant fonction du résultat de ladite comparaison.

6. Procédé conforme à la revendication 5, dans lequel la comparaison du bruit comporte la vérification de la similarité entre ledit signal reçu (Sc) et un signal nominal (Sn) comportant le bruit nominal (Bn) associé au mode de fonctionnement du dispositif électronique (10).

7. Procédé de vérification conforme à la revendication 6, dans lequel vérifier la similarité entre lesdits signaux comporte la mise en œuvre d'un algorithme de similarité des signaux.

8. Procédé conforme à la revendication 7, dans lequel l'algorithme mis en œuvre est sélectionné (E22) en fonction d'au moins une caractéristique du bruit nominal (Bn) associé au mode de fonctionnement du dispositif électronique (10).

9. Procédé de vérification conforme à la revendication 3, dans lequel la vérification du bruit (Bc) présent dans le signal reçu (Sc) comporte la vérification d'une caractéristique d'un bruit représentatif d'un dysfonctionnement dudit dispositif électronique.

10. Dispositif de vérification configuré pour vérifier le fonctionnement d'un dispositif électronique émettant des signaux via un canal de communication radio, ledit dispositif de vérification comportant :
- un module de réception (21) configuré pour recevoir à partir dudit canal de communication radio, un signal en provenance dudit dispositif électronique ; et
- un module de détermination (22) configuré pour déterminer le fonctionnement dudit dispositif électronique en fonction du bruit présent dans le signal reçu.

11. Equipement configuré pour communiquer avec au moins un dispositif électronique (10) via un canal de communication radio (300), ledit équipement comportant un dispositif de vérification (20) conforme à la revendication 10 destiné à vérifier le fonctionnement dudit au moins un dispositif électronique (10).

12. Dispositif électronique comportant un module d'émission configuré pour émettre, via un canal de communication radio, un signal (Sc) à destination d'un dispositif de vérification conforme à la revendication 10.

13. Système de vérification du fonctionnement d'au moins un dispositif électronique (10), ledit système comportant un ensemble de dispositifs électroniques (1) et un dispositif de vérification (20) conforme à la revendication 10 destiné à vérifier le fonctionnement dudit au moins un dispositif électronique (10).

14. Programme pour un dispositif de vérification, comprenant des instructions de code de programme destinées à commander l'exécution des étapes du procédé de vérification selon l'une des revendications 1 à 9.

15. Support d'informations lisible par un processeur dans un dispositif de vérification (20) du fonctionnement d'au moins un dispositif électronique (10), sur lequel est enregistré le programme d'ordinateur selon la revendication 14.
